# FASCICULE DE BREVET EUROPEEN

(11) **EP 3 353 122 B1**
(45) Date de publication et mention de la délivrance du brevet: **13.11.2019**
(21) Numéro de dépôt: 16756728.8
(22) Date de dépôt: 28.07.2016
(51) Int. Cl.: C03B 37/04, C03B 37/06, C03B 5/235, C03B 5/237, C03B 37/14, C03C 25/14

(54) **PROCÉDÉ ET INSTALLATION DE FABRICATION D'UN PRODUIT DE FIBRE DE VERRE**
VERFAHREN UND ANLAGE ZUR HERSTELLUNG EINES GLASFASERMATERIALS
METHOD AND FACILITY FOR MANUFACTURING A FIBERGLASS MATERIAL

(30) Priorité: 30.07.2015 FR 1557344
(43) Date de publication de la demande: 01.08.2018
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: JARRY, Luc, 61270 Beaufai (FR); JOUMANI, Youssef, 78121 Crespieres (FR); BEASSE, Grégoire, 75014 Paris (FR)
(74) Mandataire: De Vleeschauwer, Natalie Y.L.D.
(86) Numéro de dépôt international: PCT/FR2016/051960
(87) Numéro de publication internationale: WO 2017/017382

(56) Documents cités:
- EP-A1- 2 551 243
- EP-A2- 1 338 848
- DE-A1-102013 110 283
- FR-A1- 3 000 174
- FR-A1- 3 015 636
- US-A1- 2010 162 772

## Description

La présente invention concerne la fabrication de produits de fibre de verre.

Par « produit de fibre de verre » on comprend des fibres de verre en tant que tels ainsi que des produits les contenant.

Il est connu de fabriquer des fibres de verre par un procédé comprenant le filage de filets de verre issus d'un four de fusion au moyen d'une filière, l'étirage des filets ainsi obtenus et la collection des filets de verre étirés ainsi obtenus.

Distinction est faite entre :
a) l'étirage mécanique au moyen d'un bobinoir ou organe d'enroulement analogue,
b) l'étirage par frottement gazeux au moyen d'un ou plusieurs courants gazeux d'étirage, et
c) l'étirage centrifuge au moyen d'une centrifuge.

Il est également connu, par exemple de FR-A-3015636 ainsi que FR-A-3000174 et DE-A-102013110284, de chauffer de l'air par échange thermique avec des fumées évacuées d'un four de fusion de verre dans un échangeur primaire d'un ensemble d'échange de chaleur et de préchauffer un réactif choisi parmi un oxydant riche en oxygène et un combustible par échange thermique avec de l'air chaud ainsi obtenu dans un échangeur secondaire de l'ensemble d'échange de chaleur avant d'utiliser le réactif préchauffé ainsi obtenu comme réactif de combustion dans le four de fusion.

L'étirage centrifuge est en pratique industrielle généralement combiné avec un étirage par frottement gazeux.

Selon un premier mode de réalisation de l'étirage par frottement gazeux, également appelé étirage à flamme, le filet de verre est refroidi et se solidifie, avec obtention d'une baguette de verre. La baguette de verre est introduite dans une flamme. L'extrémité de la baguette est ainsi fondue et ensuite étirée par les gaz de combustion de la flamme, de manière à former un ou des filaments de laine de verre. L'étirage à flamme permet de produire des fibres de verre de grande finesse mais présente l'inconvénient de consommer beaucoup d'énergie notamment à cause de la double fusion du verre. L'étirage à flamme est le plus souvent utilisé pour des produits à haute valeur ajoutée.

Selon un deuxième procédé d'étirage par frottement gazeux, légèrement moins énergivore, également appelé étirage à gaz, le filet de verre fondu est directement, c'est-à-dire sans passer par une phase solidifiée, impacté par un ou des courants ou jets de gaz d'étirage tel qu'un courant de vapeur ou de gaz de combustion.

Suivant un procédé connu combinant l'étirage centrifuge et l'étirage par frottement gazeux, le filet de verre fondu est introduit dans une centrifugeuse et est transformé par la force centrifuge en un grand nombre de filaments de verre fondu. Lesdits filaments sont ensuite étirés par un rideau cylindrique de gaz d'étirage qui entoure la centrifugeuse. Ce dernier procédé assure la plus grande partie de la production de fibres de verre pour l'isolation.

Pour que l'étirage par frottement gazeux soit effectif, la viscosité du verre au moment de l'étirage doit être suffisamment basse, ce qui nécessite à son tour que le gaz d'étirage soit très chaud et permet de porter et/ou de maintenir le verre à une température élevée correspondant à une viscosité basse.

La présente invention a pour but de fournir un procédé de fabrication de produits de fibre de verre optimisé car moins énergivore.

La présente invention a plus particulièrement pour but de fournir un tel procédé optimisé de fabrication sans effet négatif sur la qualité des produits de fibres de verre.

Suivant la présente invention, ceci est notamment réalisé par une meilleure intégration énergétique de la phase de production de verre fondu et la phase de fibrage.

La présente invention a également pour but de fournir une installation adaptée pour la mise en œuvre d'un tel procédé optimisé.

Dans le procédé de fabrication suivant l'invention, du verre fondu est transformé en produit de fibre de verre. Cette transformation comporte les étapes suivantes :
∘ filage du verre fondu en au moins un filet,
∘ étirage du au moins un filet en un ou plusieurs filaments, et
∘ collection du ou des filaments.

La transformation de verre fondu en produit de fibre de verre comporte optionnellement également au moins une des étapes suivantes :
∘ ensimage du ou des filaments en amont de leur collection,
∘ séchage du ou des filaments,
∘ encollage du ou des filaments et réticulation du ou des filaments encollés collectés, et
∘ texturation du ou des filaments ou de fils les contenant.

L'ensimage de filaments est une pratique courante et souvent indispensable dans la fabrication de produits de fibre de verre comme notamment les fils de verre, les tissus de verre et les fibres de renforcement.

En effet, l'ensimage lubrifie les filaments et les protège (notamment contre l'abrasion) pendant la filature (fabrication de fils à partir de fibres), pendant le moulinage ou retordage, pendant la texturation, pendant le tricotage ou le tissage, etc.

L'encollage et la réticulation des filaments encollés est une pratique courante dans la fabrication des produits d'isolation, et notamment d'isolation thermique ou acoustique, ainsi que dans la fabrication de produits de protection contre l'incendie. L'encollage et la réticulation peuvent également intervenir dans la fabrication de tissus non-tissés de fibre de verre.

Le séchage des filaments peut notamment être utile afin de fixer l'agent d'ensimage ou le liant d'encollage sur les filaments par évaporation ou volatilisation d'eau ou d'un autre solvant présent dans l'agent d'ensimage/le liant.

La texturation des filaments ou de fils les contenant est une pratique courante dans la fabrication de produits textiles de fibre de verre, comme notamment les tissus tricotés, tissés ou non-tissés de fibre de verre. La texturation permet d'augmenter le volume et parfois l'élasticité des filaments ou fils.

Le verre fondu à être transformé en produit de fibre de verre est produit dans un four de fusion chauffé par combustion d'un combustible avec un oxydant riche. Dans le présent contexte on comprend par « oxydant riche » un gaz ayant une teneur en oxygène de 80%vol à 100%vol. La combustion génère de la chaleur pour la fusion et des fumées. Les fumées générées sont évacuées du four de fusion à une température entre 1000°C et 1600°C.

La combustion avec un oxydant riche chauffe le four avec un rendement élevé.

Il est à noter que le chauffage du four par combustion d'un combustible avec un oxydant riche n'exclut pas que le four soit également chauffé par des moyens supplémentaires, tels que, par exemple, des électrodes.

Suivant l'invention, une première optimisation énergétique du procédé de fabrication est réalisée :
∘ en ce qu'on chauffe de l'air par échange thermique avec des fumées évacuées dans un ensemble d'échange de chaleur avec obtention d'air chaud,
∘ en ce qu'on préchauffe un réactif par échange thermique avec l'air chaud dans l'ensemble d'échange de chaleur avec obtention de réactif préchauffé et d'air tempéré à une température entre 200°C et 500°C, et
∘ en ce qu'on utilise le réactif préchauffé comme réactif de combustion dans le four.

Le réactif est choisi parmi les oxydants riches et les combustibles gazeux. Suivant une forme de réalisation préférée, on préchauffe un oxydant riche avant son utilisation dans le four.

Il est également possible de préchauffer à la fois un oxydant riche et un combustible gazeux avant leur utilisation dans le four. Dans ce cas, le préchauffage des deux réactifs peut être réalisé en série ou en parallèle.

Une seconde optimisation énergétique du procédé de fabrication est réalisée en ce que de l'air tempéré issu de l'ensemble d'échange de chaleur est mis en œuvre lors de la transformation du verre fondu en produit de fibre de verre, de manière à exploiter la chaleur résiduelle encore présente dans cet air tempéré.

Cet air tempéré peut être mis en œuvre dans un ou plusieurs étapes de la transformation du verre fondu.

Ainsi, suivant une forme de réalisation préférée de l'invention, de l'air tempéré peut être mis en œuvre lors de l'étirage du filet. Dans ce cas, de l'air tempéré peut être utilisé pour la production d'un ou plusieurs courants gazeux d'étirage ou pour la production d'une ou plusieurs flammes d'étirage.

Quand la transformation comporte une étape d'ensimage du ou des filaments, l'air tempéré peut être mis en œuvre lors cette étape de l'ensimage, par exemple en utilisant de l'air tempéré comme agent de pulvérisation pour l'agent d'ensimage.

Quand la transformation comporte une étape d'encollage du ou des filaments par pulvérisation, de l'air tempéré peut être utilisé comme agent de pulvérisation pour un liant d'encollage.

Quand la transformation comporte une étape de séchage du ou des filaments, de l'air tempéré peut être mis en œuvre comme agent de séchage en contact avec du ou des filaments.

Quand la transformation comporte une étape de texturation, de l'air tempéré peut être utilisé comme courant de gaz de texturation, et plus particulièrement en tant que jet turbulent d'air de texturation.

De l'air tempéré issu de l'ensemble d'échange de chaleur peut être utilisé dans une des étapes susmentionnées ou dans plusieurs desdites étapes.

Suivant la présente invention, on réalise ainsi une synergie énergétique entre, d'une part, la fusion et, d'autre part, la transformation du verre fondu en aval de la fusion et ceci en ce que de l'air tempéré issu de l'ensemble d'échange de chaleur est mis en œuvre lors de la transformation du verre fondu en produit de fibre de verre.

Dans le présent contexte, on comprend par « échange de chaleur » ou « échange thermique », entre deux fluides de températures différentes, le transfert de chaleur ou d'énergie thermique de l'une des deux fluides (fluide le plus chaude) vers l'autre des deux fluides (fluide le moins chaud) à travers une ou des parois sans que les deux fluides entrent en contact direct ou se mélangent.

Par « échangeur de chaleur » ou « échangeur » on comprend une installation ou un dispositif dans lequel deux fluides de températures différentes circulent dans des enceintes ou circuits distincts sans contact direct ou mélange entre les deux fluides, installations ou dispositifs dans lequel ou lesquels de la chaleur est transmise du fluide le plus chaud au fluide le moins chaud à travers une ou des parois séparant les deux enceintes ou circuits.

Le terme « filament » se réfère à un filet étiré.

Afin d'améliorer l'homogénéité du filet de verre et ainsi l'homogénéité et la qualité du ou des filaments obtenus par étirage du filet, le verre fondu peut être affiné avant le filage.

La fusion et l'affinage du verre peuvent alors avoir lieu dans une même chambre de fusion-affinage du four, la zone d'affinage étant alors située en aval de la zone de fusion et en amont de la sortie de verre fondu dans le sens d'écoulement du verre.

La fusion et l'affinage peuvent également avoir lieu dans des chambres séparées du four, la chambre d'affinage étant située en aval de la chambre de fusion. On considère alors que le four englobe ces deux chambres.

Suivant une forme de réalisation, le verre fondu est extrudé immédiatement à la sortie du four, par exemple à travers une filière située à la sortie de verre fondu du four.

Suivant une forme de réalisation alternative, le verre fondu issu du four est transporté par une canalisation du four, c'est-à-dire d'une sortie de verre fondu du four, vers une filière pour le filage du verre fondu en filet(s).

Dans le présent contexte, le terme « filière » se réfère à tout dispositif de filage permettant de réaliser un ou plusieurs filets de verre fondu à partir d'un bain de verre fondu. La filière peut se présenter sous plusieurs formes de réalisation, telle qu'une plaque métallique percée. La filière peut elle-même être chauffée, par exemple de manière électrique, afin d'éviter que la ou les perforations d'extrusion/de filage soient partiellement ou totalement bouchées par du verre (partiellement) solidifié, voire cristallisé.

L'ensemble d'échange de chaleur comporte avantageusement un échangeur primaire et un échangeur secondaire. On chauffe alors de l'air par échange thermique avec des fumées évacuées du four de fusion dans l'échangeur primaire et on préchauffe le réactif dans l'échangeur secondaire par échange thermique avec l'air chaud issu de l'échangeur primaire.

Suivant une forme de réalisation du procédé, l'ensemble d'échange de chaleur comporte un échangeur primaire et un échangeur secondaire, de l'air étant chauffé par échange thermique avec des fumées évacuées du four dans l'échangeur primaire avec obtention de l'air chaud à une température entre 500°C et 800°C et le réactif de combustion est préchauffé dans l'échangeur secondaire par échange thermique avec de l'air chaud issu de échangeur primaire.

Comme indiqué ci-dessus, de l'air tempéré est avantageusement utilisé dans une étape d'étirage à frottement gazeux et plus particulièrement pour la production d'un ou plusieurs courants gazeux d'étirage.

Suivant une telle forme de réalisation, l'étirage est un étirage à flamme.

Dans ce cas, on effectue avantageusement cet étirage à flamme au moyen d'une flamme d'étirage générée par combustion d'un combustible avec de l'air tempéré issu de l'ensemble d'échange de chaleur.

La chaleur résiduelle de l'air tempéré permet de réaliser une économie d'énergie significative dans ce procédé connu comme étant énergivore.

Suivant une autre forme de réalisation, l'étirage est un étirage à gaz. Dans ce cas, on utilise avantageusement un jet de gaz d'étirage généré par combustion d'un combustible avec de l'air tempéré issu de l'ensemble d'échange de chaleur.

Dans ce cas également, il est possible de réaliser une économie d'énergie significative grâce à la chaleur résiduelle de l'air tempéré permet de réaliser une économie d'énergie significative.

Comme décrit ci-dessus, l'étirage peut également être un étirage centrifuge suivi d'un étirage à gaz. Suivant une forme de réalisation préférée de l'invention, l'étirage centrifuge est suivi d'un étirage à gaz au moyen d'un jet de gaz d'étirage généré par combustion d'un combustible avec de l'air tempéré issu de l'ensemble d'échange de chaleur.

L'étirage du ou des filets a de préférence lieu à l'intérieur d'une hotte de manière à mieux maîtriser les conditions, et notamment la température, d'étirage, ainsi que, en particulier quand le filet est étiré en plusieurs filaments, à éviter ou à limiter l'envol de filaments. Le ou les filaments peuvent également être ensimés et/ou encollés et/ou séchés à l'intérieur de cette hotte. Quand le ou les filaments sont collectés sur un convoyeur, celui-ci se trouve alors avantageusement en bas de la hotte.

Le procédé suivant l'invention est utile pour la production d'une grande gamme de produits de fibre de verre, et notamment pour la production de produits tels que les fibres ou fils de renforcement, les tissus de renforcement, les tissus textiles, les produits d'isolation thermique, les produits d'isolation acoustique, les produits de protection contre l'incendie. Quand le produit de fibre de verre est un tissu, ce tissu peut être un tissu tricoté, un tissu tissé, ou un tissu non-tissé.

La présente invention concerne également une installation apte à être utilisé pour la mise en œuvre du procédé de fabrication suivant l'invention.

L'installation comprend un four de fusion de verre et une unité de transformation pour la transformation de verre fondu en un produit de fibre de verre.

Le four de l'installation est destiné à produire du verre fondu à partir de matières solides. Il comporte une sortie de verre fondu, une sortie de fumées et au moins un brûleur pour la combustion d'un combustible avec un oxydant riche, c'est-à-dire un oxydant ayant une teneur en oxygène de 80%vol à 100%vol

Le four comporte généralement plusieurs tels brûleurs.

Comme déjà indiqué précédemment, le four peut également comporter d'autres dispositifs de chauffage en complément du au moins un brûleur susmentionné.

L'unité de transformation de l'installation comporte un dispositif, appelé filière, pour le filage de verre fondu issu du four de fusion en au moins un filet, la filière étant plus particulièrement fluidiquement reliée à la sortie de verre fondu du four.

L'unité de transformation comporte également un dispositif d'étirage pour l'étirage d'au moins un filet issu de la filière en un ou plusieurs filaments, ainsi qu'un collecteur pour la collection du ou des filaments issus du dispositif d'étirage.

L'unité de transformation comporte optionnellement aussi un ou plusieurs des dispositifs suivants :
∘ un ensimeur pour l'ensimage du ou des filaments en amont du collecteur,
∘ un encolleur pour l'encollage du ou des filaments avec un liant et une chambre de réticulation pour la réticulation du ou des filaments encollés, la chambre de réticulation étant située en aval du collecteur et étant souvent appelé étuve de réticulation,
∘ un sécheur pour le séchage du ou des filaments, en particulier du ou des filaments ensimés ou encollés, et
∘ une enceinte de texturation du ou des filaments ou de fils les contenant.

Le dispositif d'étirage de l'installation est avantageusement adapté pour la mise en œuvre d'un quelconque des procédés d'étirage mentionné ci-dessus. Ainsi, le dispositif d'étirage peut comporter :
- un ou plusieurs dispositifs d'étirage mécanique, telle que des bobinoirs ou appareils analogues, ou
- un ou plusieurs brûleurs pour l'étirage à flamme, ou
- un ou plusieurs générateurs de courants de gaz pour l'étirage à gaz, sachant que lesdits générateurs de courants de gaz peuvent être des brûleurs générant des courants de gaz de combustion utilisés en tant que courants de gaz d'étirage.

Le dispositif d'étirage peut également comporter une combinaison d'une centrifuge pour l'étirage centrifuge avec un ou plusieurs générateurs de courants de gaz pour l'étirage à gaz des filets issus de la centrifuge, lesdits générateurs pouvant, comme indiqué ci-dessus, être des brûleurs.

Quand le dispositif d'étirage produit un ou plusieurs filaments continus, le collecteur peut être un bobinoir ou autre dispositif pour l'enroulement du ou des filaments. Il est ainsi possible d'utiliser un bobinoir à la fois en tant que dispositif d'étirage mécanique et collecteur.

Le collecteur peut également être un convoyeur sur lequel le ou les filaments sont collectés. Un tel convoyeur est particulièrement indiqué quand le ou les filets sont étirés en un grand nombre de filaments et en particulier en un grand nombre de filaments de faible longueur, tels que mis en œuvre pour la fabrication de produits d'isolation thermique et/ou d'isolation acoustique et/ou de protection contre l'incendie.

L'installation suivant l'invention est conçue de manière à permettre une efficacité énergétique élevée du four de fusion ainsi qu'une synergie énergétique entre le four de fusion et l'unité de transformation située en aval du four.

A cette fin, l'installation comporte un ensemble d'échange de chaleur pour le chauffage d'air par échange thermique avec des fumées évacuées du four de fusion et pour le préchauffage d'un réactif de combustion par échange thermique avec l'air chaud ainsi obtenu.

On obtient ainsi du réactif de combustion préchauffé et de l'air tempéré. L'ensemble d'échange de chaleur est fluidiquement relié à une source d'air, à la sortie de fumées du four et à une source de réactif de combustion, cette dernière source étant une source d'oxydant riche ou une source de combustible gazeux.

L'ensemble d'échange de chaleur présente une sortie d'air tempéré et une sortie de réactif préchauffé.

La sortie de réactif de combustion préchauffé de l'ensemble d'échange de chaleur est fluidiquement reliée à un ou plusieurs brûleurs du four de fusion afin de permettre l'utilisation du réactif préchauffé comme réactif de combustion dans le four de fusion.

Suivant l'invention, la sortie d'air tempéré de l'ensemble d'échange de chaleur est fluidiquement reliée à au moins un des dispositifs suivants :
- le dispositif d'étirage : pour la réalisation d'une flamme d'étirage ou d'un courant gazeux d'étirage au moyen d'air tempéré issu de l'ensemble d'échange de chaleur ;
- l'ensimeur, si présent : pour l'utilisation d'air tempéré issu de l'ensemble d'échange de chaleur comme agent de pulvérisation pour un agent d'ensimage ;
- l'encolleur, si présent : pour l'utilisation d'air tempéré issu de l'ensemble d'échange de chaleur comme agent de pulvérisation du liant ;
- le sécheur, si présent : pour l'utilisation d'air tempéré issu de l'ensemble d'échange de chaleur comme agent de séchage en contact avec le ou les filaments ;
- l'enceinte de texturisation, si présente : pour l'utilisation d'air tempéré issu de l'ensemble d'échange de chaleur comme courant de gaz de texturation, et plus particulièrement en tant que jet turbulent d'air de texturation.

Dans le présent contexte, deux éléments sont « fluidiquement reliés » quand ils sont connectés par un conduit ou une canalisation de manière à permettre l'écoulement d'un fluide d'un des deux éléments vers l'autre des deux éléments à travers ce conduit ou cette canalisation.

La source d'air peut, par exemple, être une soufflante d'air.

L'ensemble d'échange thermique permet de préférence au moins le préchauffage d'un oxydant riche, voire le préchauffage d'un oxydant riche et d'un combustible gazeux.

La source d'oxydant riche peut, par exemple, être une unité de séparation des gaz de l'air ou un pipeline ou réservoir d'un oxydant riche liquéfié.

L'ensemble d'échange de chaleur comporte de manière utile un premier échangeur de chaleur dit « échangeur primaire » ou « échangeur de chaleur primaire » pour l'échange thermique entre les fumées évacuées du four et l'air à chauffer, ainsi qu'un deuxième échangeur de chaleur dit « échangeur de chaleur secondaire » ou « échangeur secondaire » pour l'échange thermique entre l'air chaud issu de l'échangeur primaire et le réactif à préchauffer.

Dans ce cas, l'échangeur primaire est fluidiquement relié à la source d'air et à la sortie de fumées du four. L'échangeur secondaire est fluidiquement relié à la source de réactif à préchauffer. L'échangeur secondaire présente également la sortie de réactif de combustion préchauffé et la sortie d'air tempéré.

Suivant une forme de réalisation permettant le préchauffage d'un oxydant riche et d'un combustible gazeux, l'ensemble d'échange de chaleur comporte un premier et un deuxième échangeur secondaire, le premier échangeur secondaire étant fluidiquement relié à une source d'oxydant riche et le deuxième échangeur secondaire étant fluidiquement relié à une source d'un combustible gazeux.

Ces deux échangeurs secondaires peuvent être disposés en série ou en parallèle par rapport à l'écoulement de l'air chaud issu de l'échangeur primaire.

Le four peut être un four de fusion/affinage tel que décrit ci-dessus.

La filière peut être située à la sortie de verre fondu du four de fusion. L'installation peut également comporter une canalisation pour le transport de verre fondu de cette sortie de verre fondu vers la filière.

Suivant une forme de réalisation préférée de l'installation suivant l'invention, le dispositif d'étirage comporte un brûleur d'étirage pour la réalisation d'une flamme d'étirage ou pour la réalisation d'un courant gazeux d'étirage par la combustion d'un combustible avec de l'air tempéré issu de l'ensemble d'échange de chaleur, ledit brûleur d'étirage étant alors fluidiquement relié avec la sortie d'air tempéré de l'ensemble d'échange de chaleur.

Suivant une forme de réalisation particulièrement préférée, le dispositif d'étirage comporte une centrifuge pour l'étirage centrifuge du ou des filets, ainsi qu'un brûleur d'étirage pour l'étirage à gaz des filaments issus de la centrifuge.

Dans ce cas, le brûleur d'étirage est avantageusement annulaire, apte à générer un courant gazeux d'étirage autour de la centrifuge et fluidiquement relié à la sortie d'air tempéré de l'ensemble d'échange de chaleur pour la fourniture d'air tempéré comme comburant au brûleur d'étirage.

L'installation suivant l'invention comporte de manière utile une hotte entourant le dispositif d'étirage. Cette hotte peut également entourer un ou plusieurs des dispositifs suivants : l'ensimeur, l'encolleur et le sécheur. Quand l'installation est destinée à produire un grand nombre de filaments courts, la hotte permet d'éviter ou de limiter l'envol de filaments pendant le fonctionnement de l'installation. La hotte permet aussi, plus généralement, de mieux contrôler les conditions d'étirage, voire de séchage, d'ensimage et/ou d'encollage.

Quand l'installation est destinée à produire un grand nombre de filaments courts, le collecteur est de préférence situé en dessous ou en bas de la hotte.

L'installation suivant l'invention peut être une installation pour la production de fibres ou fils de renforcement, de tissus, tricotés, tissés ou non-tissés, textiles ou de renforcement, ou encore de produits d'isolation acoustique et/ou d'isolation thermique et/ou de protection contre l'incendie

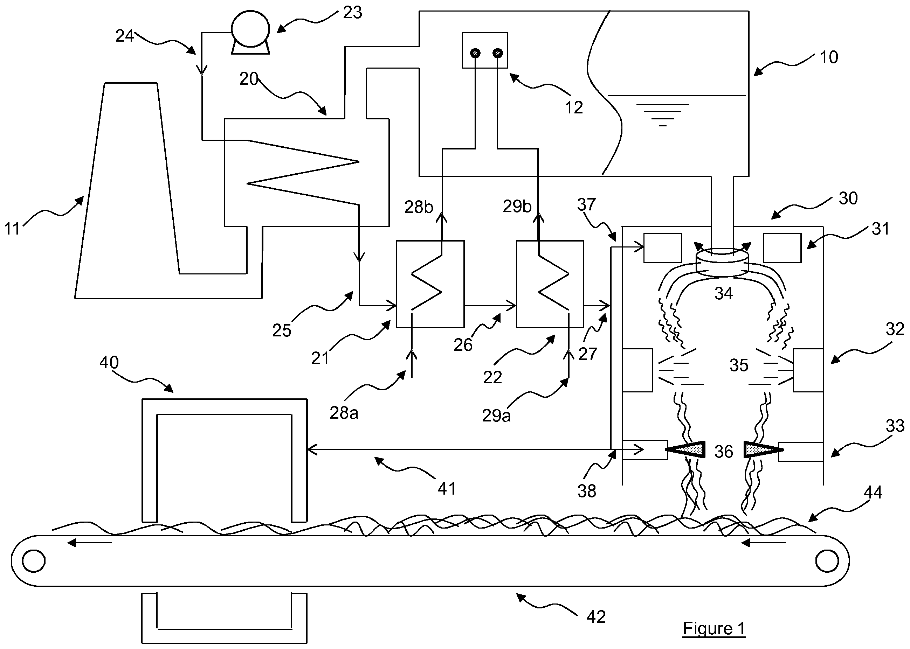

La figure 1 est une représentation schématique d'un procédé et d'une installation pour la fabrication d'une nappe d'isolation thermique/d'isolation acoustique et/ou de protection contre l'incendie.

L'installation illustrée dans la figure 1 comporte un four de fusion de verre 10 chauffé par un nombre de brûleurs 12 (un seul brûleur est montré dans la figure).

A cette fin, de l'oxydant riche 28a, typiquement un gaz contenant entre 80%vol et 100%vol d'oxygène, et un combustible gazeux 29a, tel que le gaz naturel, sont fournis auxdits brûleurs 12.

Les fumées ou gaz de combustion générés par la combustion du combustible 29a avec l'oxydant riche 28a sont évacués du four de fusion 10 et introduits dans un échangeur primaire 20 afin de chauffer de l'air comprimé ou non 24 fourni par le compresseur ou un ventilateur 23.

En aval de l'échangeur primaire 20, les fumées sont évacuées à travers la cheminée 11, typiquement après avoir subies un traitement d'élimination de polluants et des poussières.

L'air chaud 25 issu de l'échangeur primaire 20 est introduit dans un premier échangeur secondaire 21 pour le préchauffage de l'oxydant riche 28a et ensuite, sous forme d'air partiellement tempéré 26 dans un deuxième échangeur secondaire 22 pour le préchauffage du combustible gazeux 29a.

L'oxydant riche préchauffé 28b issu du premier échangeur secondaire 21 et le combustible gazeux préchauffé 29b issu du deuxième échangeur secondaire 22 sont fournis aux brûleurs 12 comme réactifs de combustion.

Ceci permet une première économie d'énergie très importante dans le procédé de fabrication suivant l'invention.

Le verre fondu issu du four de fusion 10 est introduit sous forme de filet de verre fondu dans une centrifugeuse 34 et les filaments issus de la centrifugeuse 34 sont étirés au moyen d'un courant annulaire de gaz d'étirage généré par le brûleur d'étirage en forme de couronne 31.

Les filaments issus de cet ensemble d'étirage sont encollés par les pulvérisateurs 32 de liant 35 et ensuite séchés par des jets d'agent gazeux de séchage 36 injectés par les sécheurs 33.

Les étapes d'étirage, d'encollage et de séchage sont effectuées dans un environnement contrôlé à l'intérieur d'une hotte 30.

Les filaments encollés séchés sont collectés sous forme d'une nappe 44 de filaments par un convoyeur 42 en bas de la hotte 30.

Le convoyeur 42 amène la nappe 44 vers une étuve de réticulation 40 dans laquelle les filaments encollés sont réticulés sous l'effet de chaleur et ainsi de lier les filaments entre eux.

En aval de l'étuve 40, la nappe rigide, semi-rigide ou souple est mise en forme et emballée.

Suivant l'invention, la chaleur résiduelle présente dans l'air tempéré 27 issu des échangeurs secondaires 21, 22 est exploitée afin d'améliorer l'efficacité énergétique du procédé de transformation en aval du four de fusion 10.

Ainsi, une partie de l'air tempéré 27 est introduite comme comburant dans le brûleur d'étirage 31 afin de générer le courant de gaz d'étirage de manière plus efficace.

Une autre partie de l'air tempéré 27 est utilisée comme gaz de séchage 36 par les sécheurs 33, la chaleur résiduelle de l'air tempéré 27 permettant d'accélérer le séchage des filaments.

Dans la forme de réalisation illustrée, une dernière partie de l'air tempéré 27 est introduite dans l'étuve de réticulation et aspirée à travers la nappe 44 à l'intérieur de l'étuve afin de promouvoir la réticulation des filaments dans la nappe 44.

Les avantages de la présente invention sont illustrés dans l'exemple ci-après.

Le four de fusion produit 100 tpd de fibre d'isolation à partir de 5 MW de puissance thermique. Un appoint en énergie électrique de l'ordre 1 à 5 MWe peut être nécessaire selon les conditions de production. Les fumées de combustion sortent à 1350°C et peuvent être refroidis par dilution avec de l'air ambiante pour atteindre une température de 1200°C à l'entrée du récupérateur.

Les 500 Nm³/h de gaz naturel (95% Méthane, 2% Butane, 2% Propane et 1% CO₂) sont préchauffés à 450°C. Les 1000 Nm³/h d'oxygène sont préchauffés à 550°C. Pour préchauffer ces gaz, près de 4000 Nm³/h sont nécessaires. Chauffés à 650°C dans l'échangeur primaire, l'air est refroidi à 400°C à la sortie de l'échangeur secondaire.

Cet air tempéré, qui a une valeur énergétique 530 kW, est ensuite acheminé dans une conduite de préférence en acier Inoxydable :
- d'une part vers le générateur de gaz chauds d'étirage entourant les centrifugeuses d'étirage
- d'autre part vers la batterie de pistolets de gaz de séchage.

Grâce à cet air chaud, la quantité de combustible consommée lors de l'étirage est réduite de manière significative (10%).

## Revendications

1. Procédé de fabrication d'un produit de fibre de verre dans lequel du verre fondu est transformé en produit de fibre de verre par :
∘ filage du verre fondu en au moins un filet,
∘ étirage du au moins un filet en un ou plusieurs filaments,
∘ collection du ou des filaments, et
∘ optionnellement une ou plusieurs des étapes suivantes :
▪ ensimage du ou des filaments en amont de leur collection,
▪ séchage du ou des filaments,
▪ encollage du ou des filaments avant ou après leur collection suivi d'une réticulation du ou des filaments collectés encollés, et
▪ texturation du ou des filaments ou de fils les contenant
procédé dans lequel le verre fondu est produit dans un four de fusion (10) chauffé par combustion d'un combustible avec un oxydant riche ayant une teneur en oxygène de 80%vol à 100%vol, avec génération de chaleur et des fumées, lesdites fumées générées étant évacuées du four de fusion (10) à une température entre 1000°C et 1600°C ,
le procédé étant **caractérisé en ce que** :
∘ on chauffe de l'air (24) par échange thermique avec des fumées évacuées dans un ensemble d'échange de chaleur (20, 21, 22) avec obtention d'air chaud (25),
∘ on préchauffe un réactif (28a, 29a) choisi parmi les oxydants riches et les combustibles gazeux par échange thermique avec l'air chaud (25) dans l'ensemble d'échange de chaleur (20, 21, 22) avec obtention de réactif préchauffé (28b, 29b) et d'air tempéré (27) à une température entre 200°C et 500°C,
∘ on utilise le réactif préchauffé (28b, 29b) comme réactif de combustion dans le four (10), et
∘ de l'air tempéré (27) issu de l'ensemble d'échange de chaleur (20, 21, 22) est mis en œuvre lors de la transformation du verre fondu en produit de fibre de verre dans au moins une des étapes suivantes :
▪ lors de l'étirage du filet : pour la production d'un ou plusieurs courants gazeux d'étirage,
▪ lors de l'ensimage du ou des filaments : comme agent de pulvérisation d'un agent d'ensimage,
▪ lors de l'encollage du ou des filaments : comme agent de pulvérisation d'un liant d'encollage,
▪ lors du séchage du ou des filaments : comme agent de séchage, et
▪ lors de la texturation des filaments ou de fils les contenant : comme courant de gaz de texturation

2. Procédé suivant la revendication 1, dans lequel l'ensemble d'échange de chaleur (20, 21, 22) comporte un échangeur primaire (20) et un échangeur secondaire (21, 22), de l'air (24) étant chauffé par échange thermique avec des fumées évacuées du four (10) dans l'échangeur primaire (20) avec obtention de l'air chaud (25) à une température entre 500°C et 800°C et le réactif de combustion (28a, 29a) est préchauffé dans l'échangeur secondaire (21, 22) par échange thermique avec de l'air chaud (25) issu de échangeur primaire (20).

3. Procédé suivant la revendication 1 ou 2, dans lequel l'air tempéré (27) issu de l'ensemble d'échange de chaleur (20, 21, 22) est utilisé pour la production d'un ou plusieurs courants gazeux d'étirage.

4. Procédé suivant la revendication 3, dans lequel l'étirage est un étirage à flamme au moyen d'une flamme d'étirage générée par combustion d'un combustible avec de l'air tempéré (27) issu de l'ensemble d'échange de chaleur (20, 21, 22).

5. Procédé suivant la revendication 3, dans lequel l'étirage est un étirage à gaz au moyen d'un jet de gaz d'étirage généré par combustion d'un combustible avec de l'air tempéré (27) issu de l'ensemble d'échange de chaleur (20, 21, 22).

6. Procédé suivant la revendication 5 dans lequel l'étirage est un étirage centrifuge suivi d'un étirage à gaz au moyen d'un jet de gaz d'étirage généré par combustion d'un combustible avec de l'air tempéré (27) issu de l'ensemble d'échange de chaleur (20, 21, 22).

7. Procédé suivant l'une quelconque des revendications précédentes, dans lequel le produit de fibre de verre est choisi parmi les fibres ou fils de renforcement, les tissus textiles ou de renforcement, les produits d'isolation acoustique, les produits d'isolation thermique et les produits de protection contre l'incendie.

8. Installation comprenant un four de fusion (10) de verre et une unité de transformation pour la transformation de verre fondu en un produit de fibre de verre :
∘ le four de fusion (10) comportant une sortie de verre fondu, une sortie de fumées et au moins un brûleur (12) pour la combustion d'un combustible avec un oxydant riche ayant une teneur en oxygène de 80%vol à 100%vol ;
∘ l'unité de transformation comportant :
▪ une filière (34) pour le filage de verre fondu issu du four de fusion en au moins un filet, ladite filière (34) étant fluidiquement reliée à la sortie de verre fondu du four (10) ;
▪ un dispositif d'étirage (31) pour l'étirage d'au moins un filet issu de la filière (34) en un ou plusieurs filaments ;
▪ un collecteur (42) pour la collection du ou des filaments issus du dispositif d'étirage (31) ;
▪ optionnellement un ou plusieurs des dispositifs suivants :
• un ensimeur pour l'ensimage du ou des filaments en amont du collecteur (42),
• un sécheur (33) pour le séchage du ou des filaments en amont du collecteur (42),
• un encolleur (32) pour l'encollage du ou des filaments avec un liant (35) et une chambre de réticulation pour la réticulation du ou des filaments collectés encollés ; et
• une enceinte de texturation pour la texturation du ou des filaments ou de fils le contenant ;
l'installation étant **caractérisée en ce que** :
∘ elle comporte un ensemble d'échange de chaleur (20, 21, 22) pour le chauffage d'air (24) par échange thermique avec des fumées évacuées du four (10) et pour le préchauffage d'un réactif de combustion (28a, 29a) par échange thermique avec l'air chaud (25) avec obtention de réactif de combustion préchauffé (28b, 29b) et d'air tempéré (27), l'ensemble d'échange de chaleur (20, 21, 22) étant fluidiquement relié à une source d'air (23), à la sortie de fumées du four (10) et à une source d'un réactif de combustion choisi entre de l'oxydant riche et du combustible gazeux,
• l'ensemble d'échange de chaleur (20, 21, 22) présentant une sortie de réactif de combustion préchauffé fluidiquement reliée au brûleur (12) du four de fusion (10) ainsi qu'une sortie d'air tempéré (27) fluidiquement reliée à au moins un des dispositifs suivants :
▪ le dispositif d'étirage (31) : pour la réalisation d'une flamme d'étirage ou d'un courant gazeux d'étirage (31) au moyen d'air tempéré (27) issu de l'ensemble d'échange de chaleur (20, 21, 22) ;
▪ l'ensimeur, si présent : pour l'utilisation d'air tempéré (27) issu de l'ensemble d'échange de chaleur (20, 21, 22) comme agent de pulvérisation pour un agent d'ensimage ;
▪ le sécheur (33), si présent : pour l'utilisation d'air tempéré (27) issu de l'ensemble d'échange de chaleur (20, 21, 22) comme agent de séchage en contact avec le ou les filaments ;
▪ l'encolleur (32), si présent : pour l'utilisation d'air tempéré (27) issu de l'ensemble d'échange de chaleur (20, 21, 22) comme agent de pulvérisation du liant ;
▪ l'enceinte de texturation, si présente, pour l'utilisation d'air tempéré (27) issu de l'ensemble d'échange de chaleur (20, 21, 22) comme courant de gaz de texturisation.

9. Installation suivant la revendication 8, dans laquelle l'ensemble d'échange de chaleur (20, 21, 22) comporte un échangeur primaire (20) pour l'échange thermique entre les fumées évacuées du four (10) et l'air (24) et un échangeur secondaire (21, 22) pour l'échange thermique entre l'air chauffé (29) issu de l'échangeur primaire (20) et le réactif de combustion (28a, 29a).

10. Installation suivant la revendication 8 ou 9, dans laquelle la sortie d'air tempéré est fluidiquement relié au dispositif d'étirage (31) pour la réalisation d'une flamme d'étirage ou d'un courant gazeux d'étirage.

11. Installation suivant la revendication 10, dans laquelle le dispositif d'étirage (31) comporte un brûleur d'étirage fluidiquement relié avec la sortie d'air tempéré (27) pour la réalisation d'une flamme d'étirage ou d'un courant gazeux d'étirage par combustion d'un combustible avec de l'air tempéré (27) issu de l'échangeur secondaire (21, 22).

12. Installation suivant la revendication 11, dans le dispositif d'étirage (31) comporte également une centrifugeuse (34), le brûleur d'étirage étant annulaire et apte à générer un courant gazeux d'étirage autour de la centrifugeuse (34).

13. Installation suivant l'une quelconque des revendications 8 à 12 comportant une hotte (30) entourant le dispositif d'étirage (31), ladite hotte (30) entourant optionnellement également un ou plusieurs des dispositifs suivants : l'ensimeur, le sécheur (33) et l'encolleur (32).

## Patentansprüche

1. Verfahren zur Herstellung eines Glasfaserprodukts, wobei das geschmolzene Glas in ein Glasfaserprodukt umgewandelt wird durch:
∘ Spinnen des geschmolzenen Glases in mindestens einem Faden,
∘ Strecken des mindestens einen Fadens in ein oder mehrere Filamente,
∘ Sammeln des oder der Filamente, und
∘ optional einen oder mehrere der folgenden Schritte:
▪ Schmälzen des oder der Filamente stromaufwärts ihrer Sammlung,
▪ Trocknen des oder der Filamente,
▪ Schlichten des oder der Filamente vor oder nach ihrer Sammlung, gefolgt von einer Vernetzung des oder der gesammelten, geschlichteten Filamente, und
▪ Texturierung des oder der Filamente oder von diese enthaltenden Garnen
Verfahren, wobei das geschmolzene Glas in einem Schmelzofen (10) hergestellt wird, der durch Verbrennen eines Brennstoffs mit einem reichen Oxidationsmittel mit einem Sauerstoffgehalt von 80 Vol.-% bis 100 Vol.-% unter Erzeugung von Wärme und Rauchgasen erhitzt wird, wobei die erzeugten Rauchgase aus dem Schmelzofen (10) bei einer Temperatur zwischen 1000 °C und 1600 °C abgeführt werden,
wobei das Verfahren **dadurch gekennzeichnet ist, dass**:
∘ Luft (24) durch Wärmeaustausch mit Rauchgasen erwärmt wird, die in einer Wärmeaustauschanordnung (20, 21, 22) unter Erhalt von Heißluft (25) abgeführt werden,
∘ ein Reagens (28a, 29a), ausgewählt aus den reichen Oxidationsmitteln und den gasförmigen Brennstoffen, durch Wärmeaustausch mit der Heißluft (25) in der Wärmeaustauschanordnung (20, 21, 22) unter Erhalt von vorgewärmtem Reagens (28b, 29b) und temperierter Luft (27) bei einer Temperatur zwischen 200 °C und 500 °C vorgewärmt wird,
∘ das vorgewärmte Reagens (28b, 29b) als Verbrennungsreagens in dem Ofen (10) verwendet wird, und
∘ temperierte Luft (27) aus der Wärmeaustauschanordnung (20, 21, 22) während der Umwandlung des geschmolzenen Glases in ein Glasfaserprodukt in mindestens einem der folgenden Schritte umgesetzt wird:
▪ während der Streckung des Fadens: zur Herstellung eines oder mehrerer gasförmiger Streckströme,
▪ während des Schmälzens des oder der Filamente: als Sprühmittel eines Schmälzmittels,
▪ während des Schlichtens des oder der Filamente: als Sprühmittel eines Schlichte-Bindemittels,
▪ während der Trocknung des oder der Filamente: als Trocknungsmittel und
▪ während der Texturierung der Filamente oder von diese enthaltenden Garnen: als Texturierungsgasstrom

2. Verfahren nach Anspruch 1, wobei die Wärmeaustauschanordnung (20, 21, 22) einen Primärtauscher (20) und einen Sekundärtauscher (21, 22) umfasst wobei Luft (24), durch Wärmeaustausch mit aus dem Ofen (10) im Primärtauscher (20) abgeführten Rauchgasen unter Erhalt von Heißluft (25) bei einer Temperatur zwischen 500 °C und 800 °C erwärmt wird und das Verbrennungsreagens (28a, 29a) im Sekundärtauscher (21, 22) durch Wärmeaustausch mit Heißluft (25) aus dem Primärtauscher (20) vorgewärmt wird.

3. Verfahren nach Anspruch 1 oder 2, wobei die temperierte Luft (27) aus der Wärmeaustauschanordnung (20, 21, 22) zur Produktion eines oder mehrerer gasförmiger Streckströme verwendet wird.

4. Verfahren nach Anspruch 3, wobei das Strecken ein Flammenstrecken mittels einer Streckflamme ist, die durch Verbrennen eines Brennstoffs mit temperierter Luft (27) aus der Wärmeaustauschanordnung (20, 21, 22) erzeugt wird.

5. Verfahren nach Anspruch 3, wobei das Strecken ein Gasstrecken mittels eines Streckgasstrahls ist, der durch Verbrennen eines Brennstoffs mit temperierter Luft (27) aus der Wärmeaustauschanordnung (20, 21, 22) erzeugt wird.

6. Verfahren nach Anspruch 5, wobei das Strecken ein Zentrifugalstrecken ist, gefolgt von einem Gasstrecken mittels eines Streckgasstrahls, der durch Verbrennen eines Brennstoffs mit temperierter Luft (27) aus der Wärmeaustauschanordnung (20, 21, 22) erzeugt wird.

7. Verfahren nach einem der vorstehenden Ansprüche, wobei das Glasfaserprodukt ausgewählt ist aus den Verstärkungsfasern oder -garnen, den Textil- oder Verstärkungsgeweben, den Schalldämmprodukten, den Wärmedämmprodukten und den Brandschutzprodukten.

8. Anlage, umfassend einen Glasschmelzofen (10) und eine Umwandlungseinheit zur Umwandlung von geschmolzenem Glas in ein Glasfaserprodukt:
∘ wobei der Schmelzofen (10) einen Glasschmelzauslass, einen Rauchgasauslass und mindestens einen Brenner (12) zur Verbrennung eines Brennstoffs mit einem reichen Oxidationsmittel mit einem Sauerstoffgehalt von 80 Vol.-% bis 100 Vol.-% umfasst;
∘ wobei die Umwandlungseinheit Folgendes umfasst:
▪ eine Spinndüse (34) zum Spinnen von geschmolzenem Glas aus dem Schmelzofen in mindestens einen Faden, wobei die Spinndüse (34) fluidisch mit dem Glasschmelzauslass des Ofens (10) verbunden ist;
▪ eine Streckvorrichtung (31) zum Strecken mindestens eines Fadens aus der Spinndüse (34) in ein oder mehrere Filamente;
▪ einen Kollektor (42) zum Sammeln des oder der Filamente aus der Streckvorrichtung (31);
▪ optional eine oder mehrere der folgenden Vorrichtungen:
• einen Schmälzer zum Schmälzen des oder der Filamente stromaufwärts des Kollektors (42),
• einen Trockner (33) zum Trocknen des oder der Filamente stromaufwärts des Kollektors (42),
• einen Schlichter (32) zum Schlichten des oder der Filamente mit einem Bindemittel (35) und einer Vernetzungskammer zum Vernetzen des oder der gesammelten geschlichteten Filamente; und
• einen Texturierungsraum zum Texturieren des oder der Filamente oder von dieses enthaltenden Garnen;
wobei die Anlage **dadurch gekennzeichnet ist, dass**:
∘ sie eine Wärmeaustauschanordnung (20, 21, 22) zum Erwärmen von Luft (24) durch Wärmeaustausch mit aus dem Ofen (10) abgeführten Rauchgasen und zum Vorwärmen eines Verbrennungsreagens (28a, 29a) durch Wärmeaustausch mit der Heißluft (25) unter Erhalt von vorgewärmtem Verbrennungsreagens (28b, 29b) und temperierter Luft (27) umfasst, wobei die Wärmeaustauschanordnung (20, 21, 22) fluidisch mit einer Luftquelle (23), dem Rauchgasauslass des Ofens (10) und einer Quelle eines Verbrennungsreagens verbunden ist, ausgewählt aus dem reichen Oxidationsmittel und dem gasförmigen Brennstoff,
• wobei die Wärmeaustauschanordnung (20, 21, 22) einen Auslass von vorgewärmtem Verbrennungsreagens aufweist, der fluidisch mit dem Brenner (12) des Schmelzofens (10) verbunden ist, sowie einen Auslass temperierter Luft (27), der fluidisch mit mindestens einer der folgenden Vorrichtungen verbunden ist:
▪ der Streckvorrichtung (31): zum Realisierung einer Streckflamme oder eines gasförmigen Streckstroms (31) mittels temperierter Luft (27) aus der Wärmeaustauschanordnung (20, 21, 22);
▪ dem Schmälzer, falls vorhanden: zur Verwendung von temperierter Luft (27) aus der Wärmeaustauschanordnung (20, 21, 22) als Sprühmittel für ein Schmälzmittel;
▪ dem Trockner (33), falls vorhanden: zur Verwendung von temperierter Luft (27) aus der Wärmeaustauschanordnung (20, 21, 22) als Trocknungsmittel in Kontakt mit dem oder den Filamenten;
▪ dem Schlichter (32), falls vorhanden: zur Verwendung von temperierter Luft (27) aus der Wärmeaustauschanordnung (20, 21, 22) als Bindemittelsprühmittel;
▪ dem Texturierungsraum, falls vorhanden, zur Verwendung von temperierter Luft (27) aus der Wärmeaustauschanordnung (20, 21, 22) als Texturierungsgasstrom.

9. Anlage nach Anspruch 8, wobei die Wärmeaustauschanordnung (20, 21, 22) einen Primärtauscher (20) zum Wärmeaustausch zwischen den aus dem Ofen (10) abgeführten Rauchgasen und der Luft (24) und einen Sekundärtauscher (21, 22) zum Wärmeaustausch zwischen der erwärmten Luft (29) aus dem Primärtauscher (20) und dem Verbrennungsreagens (28a, 29a) umfasst.

10. Anlage nach Anspruch 8 oder 9, wobei der Auslass temperierter Luft fluidisch mit der Streckvorrichtung (31) zum Erzeugen einer Streckflamme oder eines gasförmigen Streckstroms verbunden ist.

11. Anlage nach Anspruch 10, wobei die Streckvorrichtung (31) einen Streckbrenner umfasst, der mit dem Auslass temperierter Luft (27) fluidisch verbunden ist, um eine Streckflamme oder einen gasförmigen Streckstrom durch Verbrennen eines Brennstoffs mit temperierter Luft (27) aus de dem Sekundärtauscher (21, 22) zu realisieren.

12. Anlage nach Anspruch 11, wobei die Streckvorrichtung (31) auch eine Zentrifuge (34) umfasst, wobei der Streckbrenner ringförmig ist und in der Lage ist, einen gasförmigen Streckstrom um die Zentrifuge (34) zu erzeugen.

13. Anlage nach einem der Ansprüche 8 bis 12, die eine Haube (30) umfasst, welche die Streckvorrichtung (31) umgibt, wobei die Haube (30) optional auch eine oder mehrere der folgenden Vorrichtungen umgibt: den Schmälzer, den Trockner (33) und den Schlichter (32).

## Claims

1. Method for fabricating a fibreglass product in which melted glass is transformed into a fibreglass product by:
∘ spinning of the melted glass into at least one strand,
∘ drawing of the at least one strand into one or several filaments,
∘ collecting of the filament or filaments, and
∘ optionally one or several of the following steps:
▪ sizing of the filament or filaments upstream from the collection thereof,
▪ drying of the filament or filaments,
▪ gluing of the filament or filaments before or after the collection thereof followed by a cross-linking of the filament or filaments collected glued, and
▪ texturing of the filament or filaments or of the threads containing them
method wherein the melted glass is produced in a melting furnace (10) heated via combustion of a fuel with a rich oxidant having an oxygen content from 80% vol to 100% vol, with generation of heat and fumes, said generated fumes being removed from the melting furnace (10) at a temperature between 1000°C and 1600°C,
the method being **characterised in that**:
∘ air (24) is heated via heat exchange with the fumes removed in a heat exchange assembly (20, 21, 22) with the obtaining of hot air (25),
∘ a reagent (28a, 29a) chosen from rich oxidants and gaseous fuels is preheated via heat exchange with the hot air (25) in the heat exchange assembly (20, 21, 22) with the obtaining of preheated reagent (28b, 29b) and of temperate air (27) at a temperature between 200°C and 500°C,
∘ the preheated reagent (28b, 29b) is used as a combustion reagent in the furnace (10), and
∘ temperate air (27) coming from the heat exchange assembly (20, 21, 22) is implemented during the transformation of the melted glass into a fibreglass product in at least one of the following steps:
▪ during the drawing of the strand: for the production of one or several drawing gas streams,
▪ during the sizing of the filament or filaments: as a spraying agent of a sizing agent,
▪ during the gluing of the filament or filaments: as a spraying agent of a gluing binder,
▪ during the drying of the filament or filaments: as a drying agent, and
▪ during the texturising of the filaments or of the threads containing them: as a texturising gas stream

2. Method according to claim 1, wherein the heat exchange assembly (20, 21, 22) comprises a primary exchanger (20) and a secondary exchanger (21, 22), air (24) being heated via heat exchange with fumes removed from the furnace (10) in the primary exchanger (20) with the obtaining of hot air (25) at a temperature between 500°C and 800°C and the combustion reagent (28a, 29a) is preheated in the secondary exchanger (21, 22) via heat exchange with hot air (25) coming from the primary exchanger (20).

3. Method according to claim 1 or 2, wherein the temperate air (27) coming from the heat exchange assembly (20, 21, 22) is used for the production of one or several drawing gas streams.

4. Method according to claim 3, wherein the drawing is a flame drawing by means of a drawing flame generated by combustion of a fuel with temperate air (27) coming from the heat exchange assembly (20, 21, 22).

5. Method according to claim 3, wherein the drawing is a drawing by gas by means of a drawing gas stream generated by combustion of a fuel with temperate air (27) coming from the heat exchange assembly (20, 21, 22).

6. Method according to claim 5, wherein the drawing is a centrifugal drawing followed by a gas drawing by means of a drawing gas stream generated by combustion of a fuel with the temperate air (27) coming from the heat exchange assembly (20, 21, 22),

7. Method according to any one of the preceding claims, wherein the fibreglass product is chosen from reinforcing fibres or threads, textiles or reinforcing fabrics, acoustical insulation products, heat insulation products and fire protection products.

8. Facility comprising a glass melting furnace (10) and a transformation unit for the transformation of melted glass into a fibreglass product:
∘ the melting furnace (10) comprising a melted glass outlet, a fume outlet and at least one burner (12) for the combustion of a fuel with a rich oxidant having a content in oxygen from 80% vol to 100% vol;
∘ the transformation unit comprising:
▪ a spinneret (34) for the spinning of melted glass coming from the melting furnace into at least one strand, said spinneret (34) being fluidically connected to the melted glass outlet of the furnace (10);
▪ a drawing device (31) for the drawing of at least one strand coming from the spinneret (34) into one or several filaments;
▪ a collector (42) for the collection of the filament or filaments coming from the drawing device (31);
▪ optionally one or several of the following devices:
• a sizer for the sizing of the filament or filaments upstream from the collector (42),
• a dryer (33) for the drying of the filament or filaments upstream from the collector (42),
• a gluer (32) for the gluing of the filament or filaments with a binder (35) and a cross-linking chamber for the cross-linking of the filament or filaments collected glued; and
• a texturising chamber for the texturising of the filament or filaments or of the threads containing it;
the facility being **characterised in that**:
∘ it comprises a heat exchange assembly (20, 21, 22) for the heating of air (24) via heat exchange with fumes removed from the furnace (10) and for the preheating of a combustion reagent (28a, 29a) via heat exchange with the hot air (25) with the obtaining of a preheated combustion reagent (28b, 29b) and temperate air (27), the heat exchange assembly (20, 21, 22) being fluidically connected to a source of air (23), to the fume outlet of the furnace (10) and to a source of a combustion reagent chosen between the rich oxidant and gaseous fuel,
• the heat exchange assembly (20, 21, 22) having a preheated combustion reagent outlet fluidically connected to the burner (12) of the melting furnace (10) as well as a temperate air outlet (27) fluidically connected to at least one of the following devices:
▪ the drawing device (31): for generating a drawing flame or of a drawing gas stream (31) by means of temperate air (27) coming from the heat exchange assembly (20, 21, 22);
▪ the sizer, if present: for the use of temperate air (27) coming from the heat exchange assembly (20, 21, 22) as a spraying agent for a sizing agent;
▪ the dryer (33), if present: for the use of temperate air (27) coming from the heat exchange assembly (20, 21, 22) as a drying agent in contact with the filament or filaments;
▪ the gluer (32), if present: for the use of temperate air (27) coming from the heat exchange assembly (20, 21, 22) as a spraying agent of the binder;
▪ the texturising chamber, if present, for the use of temperate air (27) coming from the heat exchange assembly (20, 21, 22) as a texturing gas stream.

9. Facility according to claim 8, wherein the heat exchange assembly (20, 21, 22) comprises a primary exchanger (20) for the heat exchange between the fumes removed from the furnace (10) and the air (24) and a secondary exchanger (21, 22) for the heat exchange between the heated air (29) coming from the primary exchanger (20) and the combustion reagent (28a, 29a).

10. Facility according to claim 8 or 9, wherein the temperate air outlet is fluidically connected to the drawing device (31) for generating a drawing flame or of a drawing gas stream.

11. Facility according to claim 10, wherein the drawing device (31) comprises a drawing burner fluidically connected with the temperate air outlet (27) for generating a drawing flame or of a drawing gas stream via combustion of a fuel with the temperate air (27) coming from the secondary exchanger (21, 22).

12. Facility according to claim 11, in which the drawing device (31) also comprises a centrifuge (34), the drawing burner being annular and able to generate a drawing gas stream around the centrifuge (34).

13. Facility according to any of claims 8 to 12 comprising a hood (30) surrounding the drawing device (31), said hood (30) optionally also surrounding one or several of the following devices: the sizer, the dryer (33) and the gluer (32).
